# FASCICULE DE BREVET EUROPEEN

(11) **EP 3 671 872 B1**
(45) Date de publication et mention de la délivrance du brevet: **29.10.2025**
(21) Numéro de dépôt: 19217020.7
(22) Date de dépôt: 17.12.2019
(51) Int. Cl.: H04B 11/00, B06B 1/02

(54) **DISPOSITIF DE TRANSMISSION ACOUSTIQUE**
AKUSTISCHE ÜBERTRAGUNGSVORRICHTUNG
ACOUSTIC TRANSMISSION DEVICE

(30) Priorité: 19.12.2018 FR 1873338
(43) Date de publication de la demande: 24.06.2020
(73) Titulaire: Commissariat à l'Energie Atomique et aux Energies Alternatives, 75015 Paris (FR)
(72) Inventeur: FRASSATI, François, 38054 GRENOBLE CEDEX 9 (FR); JOSSELIN, Vincent, 38054 GRENOBLE CEDEX 9 (FR)
(74) Mandataire: Cabinet Beaumont

(56) Documents cités:
- CN-A- 108 566 114
- JP-A- 2017 221 932
- US-A1- 2010 102 672
- US-A1- 2014 016 558

## Description

### Domaine technique

La présente description concerne de façon générale les dispositifs électro-acoustiques, et en particulier un système de transmission acoustique.

### Technique antérieure

Dans un système de transmission acoustique, des informations et/ou de l'énergie sont transmises entre un émetteur et un récepteur par voie acoustique. Les informations et/ou l'énergie sont ainsi transmises sans fil. On utilise un tel système par exemple lorsqu'il est difficile ou non souhaité d'effectuer la transmission par fil ou par ondes électromagnétiques, par exemple radiofréquences. Le document US 2014/0165558 divulgue un système de transmission acoustique, et les documents US 2010/102672, CN 108566114, et JP 2017221932 divulguent des émetteurs acoustiques.

### Résumé de l'invention

Un mode de réalisation pallie tout ou partie des inconvénients des systèmes de transmission acoustique connus.

Un mode de réalisation pallie tout ou partie des inconvénients des émetteurs et/ou des récepteurs acoustiques connus.

Un mode de réalisation pallie tout ou partie des inconvénients des procédés de transmission acoustique connus.

L'invention est telle que définie par le jeu de revendications.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente schématiquement un système de transmission acoustique du type auquel s'appliquent les modes de réalisation décrits ;
la figure 2 représente schématiquement un mode de réalisation d'un émetteur acoustique ;
la figure 3 représente schématiquement un mode de réalisation d'un récepteur acoustique ;
la figure 4 illustre, sous forme de blocs, un mode de réalisation d'un procédé mis en oeuvre par l'émetteur de la figure 2 et le récepteur de la figure 3 ;
la figure 5 illustre des exemples d'allures d'une intensité acoustique, du module correspondant d'une admittance, et de la phase correspondante de cette admittance, en fonction de la fréquence ;
la figure 6 représente schématiquement un mode de réalisation d'un émetteur acoustique ;
la figure 7 représente schématiquement un exemple de réalisation d'un démodulateur de l'émetteur de la figure 6 ; et
la figure 8 représente schématiquement des exemples d'éléments du démodulateur de la figure 7.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, des circuits de génération d'un signal alternatif et de commande de la fréquence de ce signal, ainsi que des circuits de commande et de réception de valeurs fournies par des capteurs, ne sont pas décrits en détail, les modes de réalisation décrits étant compatibles avec de tels circuits usuels.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

Divers exemples de mise en œuvre et de réalisation sont exposés par la suite. Indépendamment de la dénomination donnée à ces exemples (modes de réalisation, exemples, variantes, etc.) et des qualificatifs employés (par exemple, de préférence, etc.), seules les parties de description incluses dans la portée des revendications font partie de la présente invention, les autres exemples n'étant exposés qu'à titre illustratif et n'étant utiles que pour mettre en évidence des aspects spécifiques à l'invention par rapport à ce qui n'en fait pas partie.

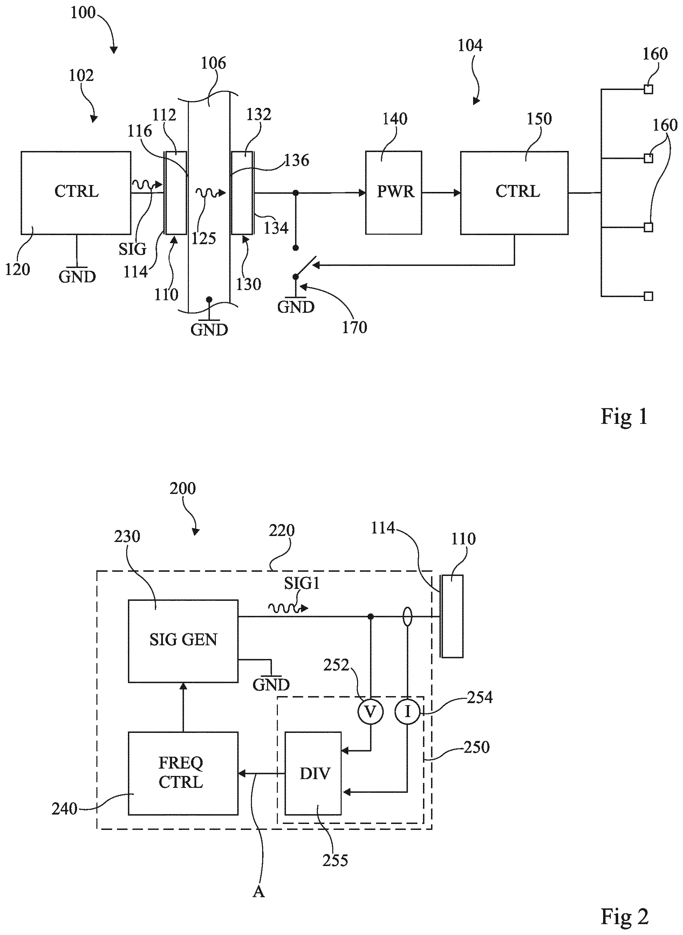

La figure 1 représente schématiquement un système de communication acoustique du type auquel s'appliquent les modes de réalisation décrits.

Le système 100 comprend un émetteur acoustique 102 et un récepteur acoustique 104. L'émetteur 102 et le récepteur 104 sont séparés par une paroi 106.

L'émetteur 102 comprend un générateur acoustique 110 fixé à la paroi 106. Le générateur acoustique 110 comprend de préférence un transducteur piézoélectrique 112. Le transducteur piézoélectrique 112 est par exemple disposé entre une électrode 114 et une face de la paroi 106. A titre d'exemple, la paroi 106 est conductrice et définit une masse GND. La paroi 106 définit ainsi une autre électrode pour le transducteur piézoélectrique 112. La paroi 106 et l'électrode 114 constituent ainsi des bornes du générateur acoustique 110. Le transducteur piézoélectrique 112 est par exemple collé à la paroi par une colle 116. Le générateur acoustique 110 est relié à un circuit de commande 120 (CTRL). En variante, le transducteur 112 est disposé entre l'électrode 114 et une autre électrode située entre le transducteur et la paroi. La paroi est alors éventuellement non conductrice ou peut comprendre une couche non conductrice contre le générateur 110.

En fonctionnement, le circuit de commande 120 applique au générateur 110 un signal alternatif SIG, par exemple référencé à la masse GND. L'application du signal SIG au générateur 110 provoque une émission acoustique (ondes acoustiques 125), par exemple ultrasonore. Le signal SIG correspond ainsi à un signal d'excitation du générateur. La fréquence d'émission acoustique est celle du signal SIG.

Le récepteur 104 comprend un capteur acoustique 130 fixé à la paroi 106. Le capteur acoustique 130 comprend de préférence un transducteur piézoélectrique 132. Le transducteur piézoélectrique 132 est de préférence de même type que le transducteur 112. Le transducteur 132 est situé entre une électrode 134 et la paroi 106 qui définissent les bornes du capteur acoustique 130. Le transducteur piézoélectrique 132 est fixé à une face de la paroi 106 opposée au générateur 110, de préférence en vis-à-vis du générateur 110. La fixation est par exemple réalisée par une colle 136. Par exemple, les transducteurs 112 et 132 sont disposées symétriquement par rapport à la paroi. Le récepteur 104 comprend en outre une unité d'alimentation 140 (PWR) reliée à un circuit 150 (CTRL).

En fonctionnement, les ondes acoustiques 125 sont reçues par le capteur 130. Le capteur 130 convertit les ondes acoustiques reçues en énergie électrique, et fournit une tension alternative, par exemple référencée à la masse GND. L'unité 140 stocke cette énergie et l'utilise pour alimenter le circuit de commande 150.

Dans le système 100, le récepteur 104 est donc alimenté à travers la paroi 106. Cette alimentation est réalisée sans perforation de la paroi. On peut utiliser un système de ce type dans des applications dans lesquelles le récepteur est situé en milieu confiné ou inaccessible. Par exemple, la paroi 106 peut être celle d'une enceinte de confinement nucléaire, d'un avion, d'un navire, ou encore d'un tuyau. Dans le cas d'un tuyau, le générateur 110 est par exemple fixé au tuyau par un collier et relié acoustiquement au tuyau par un gel de transmission acoustique. La paroi 106 a une épaisseur de préférence supérieure à environ 5 mm, par exemple de l'ordre de 50 mm.

Le circuit 150 constitue par exemple un circuit de commande et/ou d'alimentation de capteurs 160, et de réception de valeurs fournies par ces capteurs. Les capteurs 160 captent par exemple des valeurs physiques telles que des valeurs de pression, de température, de salinité, de vitesse, de taux de radiations, ou encore par exemple de tension ou de courant de corrosion.

Typiquement, le système 100 permet en outre de transmettre du circuit 150 au circuit 120 des informations telles que les valeurs physiques captées. Pour cela, le récepteur 104 comprend en outre un interrupteur 170, par exemple un transistor, reliant entre elles les bornes du capteur 130. En fonctionnement, dans l'émetteur 102, l'impédance du générateur 110 soumis au signal SIG dépend de l'état, fermé ou ouvert, de l'interrupteur 170 du récepteur 104. Ainsi, pour transmettre un bit d'information au circuit 120, le circuit 150 ouvre et ferme l'interrupteur 170 d'une manière qui dépend de la valeur du bit à transmettre. Le circuit 120 déduit la valeur du bit à partir de l'impédance du générateur 110. Cette technique de transmission, dite de modulation de charge, permet de limiter la consommation d'énergie par le récepteur. En particulier, l'interrupteur 110 peut être en série avec une impédance, non représentée. Cette impédance réduit la consommation d'énergie par le récepteur, et réduit aussi la différence entre impédances du générateur 110 pour les positions fermée et ouverte de l'interrupteur 170. On peut donc choisir cette impédance pour optimiser le compromis entre qualité de transmission et consommation d'énergie.

Des informations peuvent aussi être transmises du circuit 120 de l'émetteur 102 au circuit 150 du récepteur 104. Pour cela, par exemple, le circuit 120 module la fréquence d'émission acoustique 125. Le circuit 150 démodule le signal acoustique reçu pour recueillir ces informations. Les modes de réalisation décrits sont compatibles avec les modes connus de communication acoustique.

La figure 2 représente schématiquement un mode de réalisation d'un émetteur acoustique 200. Plus particulièrement, l'émetteur acoustique 200 comprend un générateur acoustique 110, identique ou similaire à celui de l'émetteur 102 du système de la figure 1. Ce générateur est relié à un circuit 220 remplaçant le circuit 120 de l'émetteur 102 du système de la figure 1.

Le circuit 220 comprend un circuit 230 générateur de signal (SIG GEN). Le circuit 230 est relié, de préférence connecté, à la borne 114 du générateur acoustique 110, et à la masse destinée à constituer une autre borne du générateur acoustique 110. En variante, le circuit 230 est relié, de préférence connecté, à deux bornes du générateur acoustique 110. Le circuit 220 comprend en outre un circuit de commande 240 (FREQ CTRL), qui fixe la fréquence du signal généré par le circuit 230.

Dans le présent mode de réalisation, le circuit 220 comprend un circuit 250 de mesure de l'admittance A du générateur 110. L'admittance A correspond, lorsque le générateur 110 est soumis à un signal SIG1 généré par le générateur 110, au rapport entre les valeurs de courant et de tension aux bornes du générateur. L'admittance A est fournie au circuit 240. Le circuit 240 utilise l'admittance A du générateur 110 pour définir la fréquence du signal SIG1.

De préférence, le circuit 250 comprend un capteur de tension 252 (V). Le capteur 252 mesure la tension appliquée par le circuit 230 aux bornes du générateur acoustique 110, par exemple le potentiel, référencé à la masse, de la borne 114. De préférence, le circuit 250 comprend un capteur de courant 254 (I). Le capteur 254 mesure le courant appliqué au générateur acoustique 110 par le circuit 230. De préférence, le circuit 250 comprend en outre un circuit 255 (DIV) qui fournit l'admittance A. Pour cela, le circuit 255 détermine des valeurs complexes, chacune comprenant une phase et une amplitude, représentatives des signaux fournis respectivement par les capteurs 252 et 254. Le circuit 250 divise entre elles ces valeurs complexes pour obtenir l'admittance.

Le circuit 250 peut être tout circuit adapté à fournir une valeur représentative de l'admittance du générateur 110. Les modes de réalisation décrits sont compatibles avec les circuits connus de mesure d'admittance.

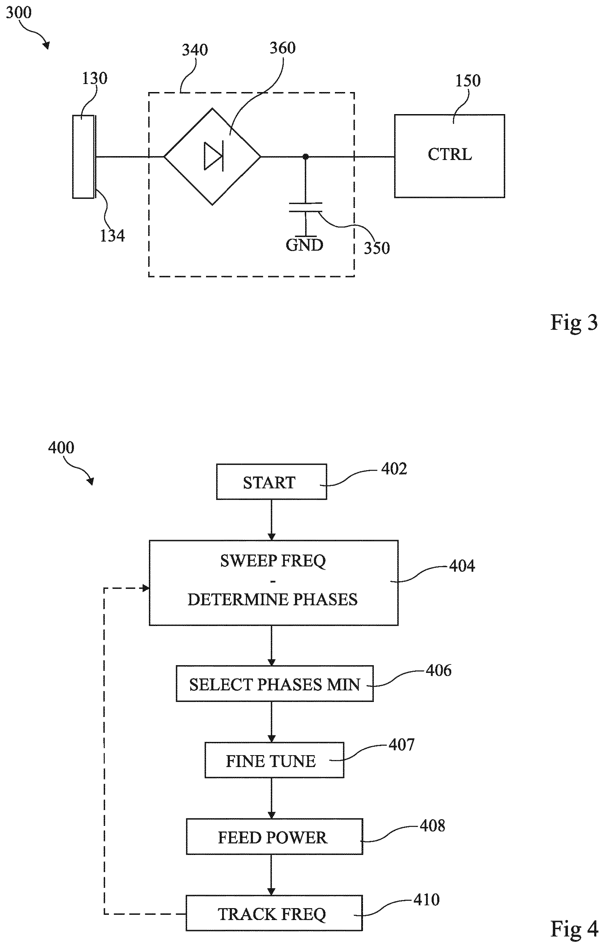

La figure 3 représente schématiquement un mode de réalisation d'un récepteur acoustique 300, destiné à recevoir les émissions acoustiques provenant de l'émetteur 200 de la figure 2.

Le récepteur 300 comprend un capteur d'ultrasons 130 et un circuit de commande 150, identiques ou similaires à ceux de la figure 1. Dans le récepteur 300, le rôle de l'unité d'alimentation 140 de la figure 1 est rempli par une unité d'alimentation 340. Le récepteur 300 peut en outre comprendre d'autres éléments tels que les capteurs 160 ou l'interrupteur 170 du récepteur de la figure 1.

L'unité d'alimentation 340 comprend un élément de stockage d'énergie, par exemple un élément capacitif 350. L'élément capacitif 350 relie, de préférence, l'entrée du circuit 150 à un noeud d'application d'un potentiel de référence, par exemple la masse GND. L'unité d'alimentation 340 comprend en outre un circuit 360 de charge de l'élément capacitif 350 à partir de l'énergie électrique fournie par le capteur 130.

De préférence, le circuit 360 charge l'élément capacitif 350 seulement lorsque l'intensité acoustique reçue par le capteur 130 est supérieure à un seuil TH. Le seuil TH peut être constant ou varier en fonction de la fréquence des ondes acoustiques reçues.

Selon un mode de réalisation, le seuil d'intensité acoustique TH est choisi de sorte que lorsque la tension appliquée au circuit 360 atteint un seuil correspondant, la tension de l'élément capacitif 350 (initialement déchargé) atteint un pourcentage donné de la valeur crête de la tension appliquée en un temps donné. Par exemple, on peut fixer le seuil TH de sorte qu'en appliquant la tension alternative correspondante au circuit 360, la tension de l'élément capacitif atteigne 63 % de la valeur crête en plus d'environ 10 secondes, par exemple en plus de 1 minute, de préférence en plus d'environ 10 minutes.

Selon un mode de réalisation, de préférence combiné avec le mode de réalisation précédent, le seuil TH est choisi de sorte que lorsque l'intensité acoustique reçue est égale au seuil TH, la résistance ou l'impédance d'entrée du circuit 360 est supérieure à environ 1 kΩ, par exemple plus de 10 kΩ, de préférence plus de 100 kΩ, par exemple 100 kΩ.

Par exemple, le circuit de charge 360 comprend un pont de diodes dont l'entrée est reliée, de préférence connectée, à la borne 134 du capteur 130 et la sortie est reliée, de préférence connectée, à l'élément capacitif 350. La valeur du seuil TH est l'intensité acoustique reçue pour laquelle la tension de seuil des diodes du pont de diodes correspond à la tension produite par le capteur 130.

La figure 4 illustre, sous forme de blocs, un mode de réalisation d'un procédé 400 mis en oeuvre par l'émetteur 200 de la figure 2 et le récepteur 300 de la figure 3. De préférence, le circuit 240 de l'émetteur 200 et le circuit 150 du récepteur 300 comprennent chacun une unité de traitement de données, telle qu'un microprocesseur, et une mémoire contenant un programme. L'exécution des programmes par respectivement le microprocesseur de l'émetteur et, lorsque le récepteur est alimenté, le microprocesseur du récepteur, met en oeuvre le procédé 400.

A une étape initiale 402 (START), l'élément capacitif 350 est déchargé. Le circuit 150 du récepteur n'est pas alimenté.

A une étape 404 (SWEEP FREQ - DETERMINE PHASES), l'émetteur 200 émet des ondes acoustiques. De préférence, l'intensité des ondes acoustiques est suffisamment faible pour que l'intensité reçue par le capteur 130 soit inférieure au seuil TH. Pour cela, la tension crête du signal SIG1 appliqué par le circuit 230 de l'émetteur 200 au générateur acoustique 110 est de préférence inférieure à environ 0,5 V, par exemple égale à environ 0,2 V. Ainsi, le récepteur 300 n'est pas alimenté électriquement au cours de cette étape 404.

A l'étape 404, la fréquence des émissions acoustiques balaye une plage de fréquences. Par exemple, la plage de fréquences balayées est comprise entre 40 kHz et 5 MHz, de préférence entre 100 kHz et 2 MHz. De préférence, le balayage est effectué par pas successifs. Le pas est par exemple compris entre environ 1 kHz et environ 20 kHz, par exemple 10 kHz.

Pour chaque fréquence appliquée, l'émetteur détermine l'admittance du générateur 110, ou au moins une valeur représentative de la phase ou de l'amplitude de cette admittance. De préférence, pour chaque fréquence, l'émetteur mesure la phase de l'admittance du générateur 110, ou une valeur représentative de cette phase.

De préférence, à une étape 406 (SELECT PHASES MIN), l'émetteur 200 choisit une ou plusieurs fréquences dans la plage balayée. De préférence, les fréquences choisies sont des fréquences pour lesquelles la phase de l'admittance du générateur a une valeur sensiblement extrémale. De préférence, les fréquences choisies sont, parmi les fréquences appliquées au cours du balayage, des fréquences pour lesquelles la phase de l'admittance est sensiblement minimale. En variante, les fréquences choisies sont des fréquences pour lesquelles l'amplitude et/ou la phase de l'admittance présentent des extrema.

De préférence, à une étape 407 (FINE TUNE), on effectue autour de chaque fréquence choisie à l'étape 406 un balayage plus fin que celui de l'étape 404. De préférence, ce balayage est effectué par pas successifs, de préférence compris entre environ 20 Hz et environ 200 Hz, par exemple de 100 Hz. On choisit alors une fréquence f0 d'émission acoustique. De préférence, la fréquence f0 choisie est celle pour laquelle la phase de l'admittance a une valeur sensiblement minimale et/ou la phase reste proche d'une valeur minimale sur une largeur maximale de gamme de fréquences.

En variante, l'étape 407 peut être omise, la fréquence f0 étant choisie directement à partir de valeur d'amplitude et/ou de phase de l'admittance déterminées à l'étape 404, par exemple parmi des valeurs pour lesquelles l'amplitude ou la phase sont extrémales.

A une étape 408 (FEED POWER), postérieure aux étapes 404 et 406 de définition de la fréquence f0, le récepteur 300 est alimenté. Pour cela, le générateur 110 applique un signal SIG2 d'intensité suffisante pour que l'intensité des ondes acoustiques reçues par le capteur 130 du récepteur 300 dépasse le seuil TH. De préférence, la tension crête du signal SIG2 appliqué au générateur 110 à l'étape 408 est plus de 10 fois, par exemple plus de 50 fois supérieure à celle du signal SIG1 appliqué au générateur 110 lors de l'étape 404.

De préférence, à une étape 410 (TRACK FREQ), le récepteur 300 est alimenté et l'émetteur et le récepteur communiquent par ondes acoustiques. De préférence, la communication acoustique est effectuée dans une bande de fréquences centrée autour de la fréquence f0 définie aux étapes 404 et 406.

Au cours de la communication le récepteur 300 informe, de préférence, l'émetteur 200 de l'intensité acoustique reçue. L'émetteur 200 ajuste alors la fréquence f0 en sorte d'optimiser la communication acoustique. De préférence, la fréquence ajustée correspond à une valeur maximale d'intensité reçue par le récepteur 300. Pour cela, par exemple, on réduit ou on augmente, par pas successifs, la fréquence centrale de la bande de fréquences, initialement à la valeur f0, jusqu'à obtenir l'intensité reçue maximale. Les pas utilisés pour l'ajustement sont de préférence inférieurs à environ 50 Hz, par exemple égaux à 20Hz. En variante, on peut utiliser tout procédé connu d'ajustement de fréquence de communication acoustique.

Dans une variante, représentée en pointillés, le procédé, après l'étape 410, retourne à l'étape 404 afin de définir une nouvelle fréquence f0.

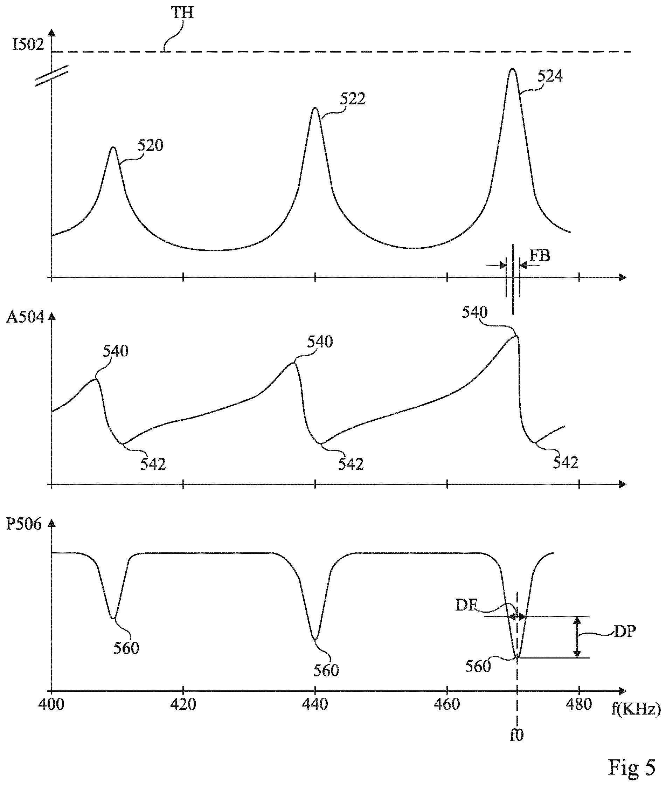

La figure 5 représente, en fonction de la fréquence, des exemples d'allures d'une intensité acoustique I502, de l'amplitude A504, ou module, de l'admittance correspondante, et de la phase P506, ou argument, de cette admittance.

L'intensité acoustique I502 illustrée ici est reçue par le capteur 130 lorsque le signal SIG1 appliqué au générateur 110 a une tension crête, ou amplitude, constante en fonction de la fréquence. Bien que le signal appliqué soit constant, l'intensité acoustique reçue n'est pas constante. Ceci est dû à divers phénomènes de résonance acoustique des composants du système, en particulier du générateur acoustique 110, de la paroi 106, et du capteur 130. L'intensité acoustique reçue présente des pics 520, 522, 524. Typiquement, les pics n'ont pas des hauteurs égales, le pic 524 étant ici plus élevé que le pic 520. De préférence, la tension crête du signal SIG1 est choisie de sorte que l'intensité maximale reçue dans la plage de fréquences balayées, ici celle du pic 524, reste inférieure au seuil TH.

Les inventeurs ont observé que l'admittance présente des variations autour des fréquences des pics d'intensité reçue. En particulier, l'amplitude de l'admittance présente un maximum 540 et minimum 542 pour chaque pic. La phase de l'admittance présente un extremum 560 pour chaque pic. Lorsque l'intensité reçue reste inférieure au seuil TH pendant la détermination de l'admittance, la fréquence correspondant aux extrema de phase de l'admittance est proche de celle des pics d'intensité reçue, par exemple la différence entre la fréquence des extrema de phase et celle des pics d'intensité est typiquement inférieure à 500 Hz, voire inférieure à 100 Hz. Ainsi, le fait de définir la fréquence f0 sur la base de l'admittance du générateur 110 permet d'obtenir une intensité acoustique sensiblement maximale transmise de l'émetteur au récepteur. Lors de l'étape d'alimentation du récepteur, la charge de l'élément capacitif est plus rapide que si la fréquence utilisée pour alimenter le récepteur ne correspond pas à une fréquence basée sur l'admittance du générateur. De plus, on évite le risque d'utiliser une fréquence pour laquelle l'intensité acoustique reçue serait trop faible pour parvenir à alimenter le récepteur. En outre, la fréquence f0 est définie sans alimentation préalable du récepteur, et en particulier sans que celui-ci ait besoin de communiquer à l'émetteur des informations telles que l'intensité acoustique reçue.

La communication est ensuite établie dans une bande de fréquences de communication acoustique FB. Cette bande a de préférence une largeur inférieure à 50 kHz, par exemple de l'ordre de 1 kHz. La fréquence centrale f0 définie ci-dessus permet, après un ajustement éventuel, d'obtenir dans cette bande de fréquences une intensité maximale du signal de communication acoustique reçu par le récepteur. On optimise ainsi la transmission d'énergie. Lorsque l'admittance est déterminée pour une intensité acoustique reçue inférieure au seuil TH, le fait que la fréquence des extrema de phase est proche de celle des pics d'intensité permet d'obtenir une intensité maximale sans besoin d'ajuster la fréquence f0, ou permet de simplifier un éventuel ajustement de la fréquence f0.

Autour de chaque extrémum de phase, la phase reste proche de sa valeur extrémale sur une gamme de fréquences de largeur DF. Par exemple, la gamme de fréquences DF est celle dans laquelle la différence entre la phase et sa valeur extrémale est inférieure à une valeur donnée DP. A titre d'exemple, la valeur DP est comprise entre 5 et 30 degrés, par exemple égale à 10 degrés ou à 20 degrés. Les inventeurs ont observé que plus la largeur DF est élevée, plus le pic d'intensité reçue correspondant est large.

Comme mentionné ci-dessus, la fréquence f0 choisie est, parmi les fréquences correspondant à des extrema de phase, celle pour laquelle la largeur DF est maximale. L'intensité acoustique transmise est donc maximale dans une plage de fréquences de largeur maximale. Ceci permet d'optimiser la transmission des informations, en particulier le débit des informations transmises.

Ainsi, le fait de définir la fréquence f0 sur la base de l'admittance du générateur 110 permet d'obtenir une bande de fréquences optimale pour la transmission d'informations et/ou d'énergie.

Les fréquences des pics d'intensité 520, 522 et 524 peuvent varier, typiquement en fonction de la température des éléments composant le système de communication, tels que le générateur 110, la paroi 106, et le capteur 130. Des variations peuvent aussi se produire, dans le cas d'une application maritime, en fonction par exemple de la température de l'eau de mer. Du fait que la fréquence f0 est basée sur l'admittance du générateur, on obtient une fréquence optimale d'alimentation du récepteur et/ou de communication acoustique pour n'importe quelle fréquence, ou position, non prévue à l'avance, des pics d'intensité.

Bien que la fréquence f0 soit définie ci-dessus par une valeur extrémale de la phase de l'admittance, on peut utiliser la phase de toute valeur représentative de l'admittance, par exemple celle de l'impédance du générateur 110 (inverse de l'admittance A). En variante, la fréquence f0 peut correspondre à un extremum 540 ou 542 de l'amplitude de l'admittance ou d'une valeur représentative de l'admittance, ou encore à un maximum de variation de l'amplitude de l'admittance ou d'une valeur représentative de l'admittance.

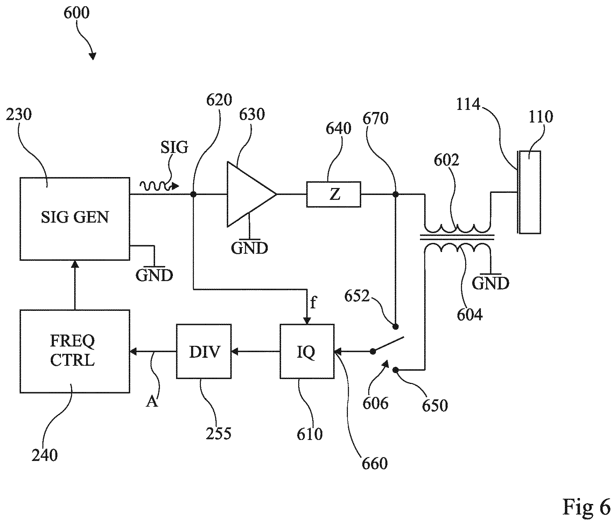

La figure 6 représente schématiquement un mode de réalisation d'un émetteur acoustique 600. L'émetteur 600 comprend des éléments identiques ou similaires à ceux de l'émetteur de la figure 2, agencés de la même manière. Ces éléments ne sont pas décrits à nouveau. Par rapport à l'émetteur de la figure 2, les fonctions des capteurs 252 et 254 de l'émetteur de la figure 2 sont remplies, dans l'émetteur 600, par des inductances 602 et 604 en couplage mutuel, un commutateur de sélection 606, et un démodulateur IQ 610 (démodulateur en phase et en quadrature "In phase / Quadrature").

L'inductance 602 est située entre un noeud 620 de sortie du circuit 230 et la borne 114 du générateur 110. De préférence, l'émetteur 600 comprend en outre, en série avec l'inductance 602 entre le noeud 620 et la borne 114, un amplificateur 630, et un circuit 640 d'adaptation d'impédance (Z). L'entrée de l'amplificateur 630 reçoit un signal SIG de sortie du circuit 230. Le signal SIG correspond successivement aux signaux SIG1 et SIG2 du procédé 400 de la figure 4. La sortie de l'amplificateur 630 est reliée, de préférence connectée, à l'entrée du circuit 640. Le circuit 640 comprend de préférence des composants passifs tels que des éléments résistifs et/ou inductifs.

Le commutateur de sélection 606, par exemple un multiplexeur, a deux noeuds d'entrée 650 et 652. Dans une position du commutateur 606, le noeud d'entrée 650 est connecté à l'entrée 660 du démodulateur IQ 610. Dans une autre position du commutateur 606, le noeud 652 est connecté à l'entrée 660 du démodulateur IQ 610. Le noeud 652 est relié, de préférence connecté, à une borne de l'inductance 602, par exemple une borne 670 située entre le circuit 640 et l'inductance 602. En variante, le noeud 652 est connecté directement à la borne 114 du générateur 110.

Le démodulateur IQ 610 reçoit la fréquence f du signal SIG généré par le circuit 230. Le démodulateur IQ 610 démodule à la fréquence f le signal reçu sur son entrée, et fournit une valeur démodulée au circuit 255.

Lorsque le démodulateur IQ 610 est connecté au noeud 650, la valeur fournie par le démodulateur IQ 610 est représentative du courant dans le générateur 110. Lorsque le démodulateur IQ 610 est connecté au noeud 652, la valeur fournie par le démodulateur IQ 610 est représentative de la tension aux bornes du générateur 110. Dans un exemple, pour obtenir l'admittance du générateur, on positionne le commutateur 606 successivement pour sélectionner le noeud 650 puis le noeud 652. Le circuit 255 mémorise la valeur de courant reçue, puis divise la valeur de courant mémorisée par la valeur de tension reçue. Dans un autre exemple, pour obtenir l'admittance du générateur 110, on positionne le commutateur 606 successivement pour sélectionner le noeud 652 puis le noeud 650. Le circuit 255 mémorise la valeur de tension puis divise la valeur de courant reçue par la valeur de tension mémorisée.

Du fait que la tension et le courant appliqués au générateur 110 ne sont pas mesurés simultanément, on utilise ainsi un seul générateur IQ pour mesurer l'admittance du générateur 110.

Dans une variante, le commutateur 606 est omis. La borne 670 est alors reliée à l'entrée du démodulateur IQ 610, et le noeud 652 est remplacé par un noeud d'entrée d'un autre démodulateur IQ. Les démodulateurs IQ fournissent au diviseur 255, de préférence simultanément, les valeurs de tension et de courant. Un avantage de cette variante est qu'elle permet de mesurer l'admittance plus rapidement qu'avec un seul démodulateur. En particulier, la durée de balayage en fréquences peut être réduite.

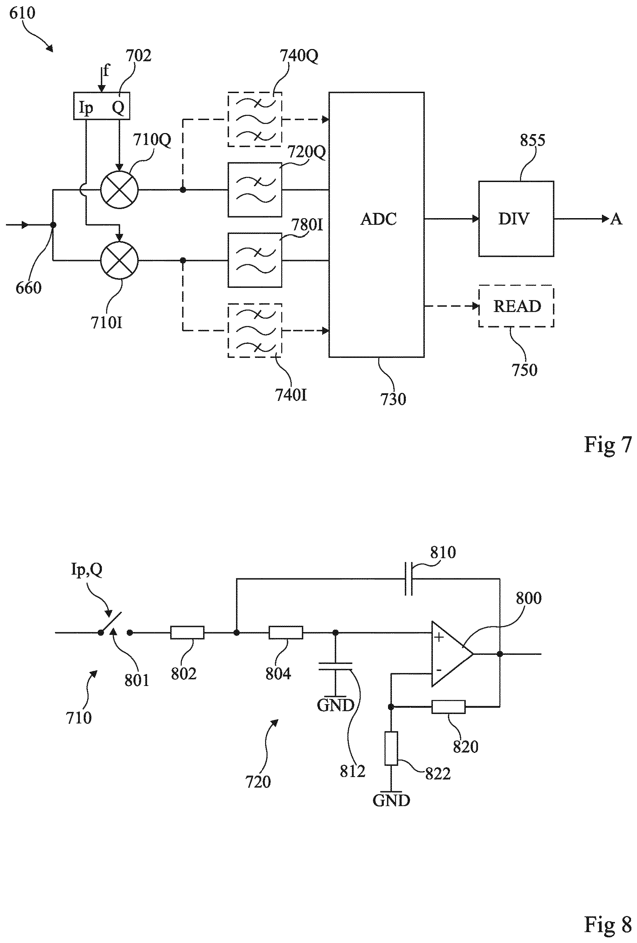

La figure 7 représente schématiquement un exemple de réalisation du démodulateur IQ 610 de l'émetteur de la figure 6.

Le démodulateur IQ 610 comprend un circuit déphaseur 702. Le circuit 702 reçoit le signal SIG à la fréquence f. Le circuit 702 fournit des signaux à la fréquence f déphasés à 90 degrés l'un par rapport à l'autre. De préférence, ces signaux sont des signaux en phase Ip et en quadrature Q avec le signal reçu par le circuit 702. Un mélangeur 710Q reçoit le signal Q et le signal en provenance du commutateur 606 (figure 6, appliqué à l'entrée 660). Un filtre passe bas 720Q relie la sortie du mélangeur 710Q à une entrée d'un convertisseur analogique-numérique 730 (ADC). Un mélangeur 710I reçoit le signal Ip et le signal appliqué à l'entrée 660. Un filtre passe-bas 720I relie la sortie du mélangeur 710I à une autre entrée du convertisseur 730. Le convertisseur 730 fournit les valeurs complexes de courant et de tension.

Dans une variante, représentée en pointillés, le démodulateur comprend en outre des filtres passe-bande 740Q et 740I reliant respectivement les sorties des mélangeurs 710Q et 710I à d'autres entrées du convertisseur 730. Lorsqu'un récepteur comprenant un interrupteur 170 (figure 1) transmet une information à l'émetteur, le récepteur ouvre et ferme l'interrupteur 170 à la fréquence centrale des filtres 740Q et 740I. La sortie du convertisseur 730 fournit alors les informations en provenance du récepteur, par exemple à un circuit 750 (READ) qui utilise ces informations.

La figure 8 représente schématiquement un mélangeur 710 en série avec un filtre passe-bas 720 du démodulateur IQ de la figure 7. Le mélangeur 710 peut constituer l'un et/ou l'autre des mélangeurs 710Q et 710I du démodulateur de la figure 7. Le filtre passe-bas 720 peut constituer l'un et/ou l'autre des filtres passe-bas 720Q et 720I du démodulateur de la figure 7.

Le mélangeur 710 comprend par exemple un interrupteur 801 commandé par le signal Ip ou Q en provenance du circuit 702 du démodulateur de la figure 7. Le filtre passe bas 720 est de préférence un circuit de type filtre de Sallen et Key, c'est-à-dire comprenant :
- un amplificateur 800 de type amplificateur opérationnel dont la sortie correspond à la sortie du filtre 720 ;
- une association série de deux résistances 802 et 804 reliant l'entrée du filtre à l'entrée non inverseuse de l'amplificateur 800 ;
- un élément capacitif 810 reliant la sortie de l'amplificateur 800 au noeud milieu de l'association série des résistances 802 et 804 ; et
- un élément capacitif 812 reliant l'entrée non inverseuse de l'amplificateur 800 à la masse.

L'entrée inverseuse de l'amplificateur 800 est reliée directement à la sortie de l'amplificateur ou, de préférence, au point milieu d'un pont diviseur constitué de résistances 820 et 822 en série entre la sortie de l'amplificateur 800 et la masse.

Les valeurs des résistances 802, 804, 820 et 822 et des capacités 810 et 812 sont choisies afin d'obtenir un filtre passe-bas d'ordre 2.

Divers modes de réalisation et variantes ont été décrits. L'homme de l'art comprendra que certaines caractéristiques de ces divers modes de réalisation et variantes pourraient être combinées, et d'autres variantes apparaitront à l'homme de l'art.

Enfin, la mise en oeuvre pratique des modes de réalisation et variantes décrits est à la portée de l'homme du métier à partir des indications fonctionnelles données ci-dessus. En particulier, le choix de la plage de fréquences utilisée dépend de l'application.

## Revendications

1. Procédé (400) comprenant des étapes consistant à :
- mesurer l'admittance d'un générateur acoustique (110) entre deux bornes (114, GND) d'application, au générateur, d'un premier signal d'excitation (SIG1) ;
- utiliser ladite admittance pour définir une fréquence d'émission acoustique (f0), ladite fréquence étant choisie, parmi les fréquences correspondant à des extrema de phase, pour correspondre à celle pour laquelle la gamme de fréquences (DF) dans laquelle la phase de l'admittance reste proche de la valeur extrémale est la plus large ;
- émettre, par ledit générateur fixé d'un côté d'une paroi (106), une émission acoustique ayant ladite fréquence ; et
- recevoir l'émission acoustique par un récepteur acoustique (300) fixé d'un autre côté de la paroi,
dans lequel ledit récepteur acoustique (300) est alimenté en énergie par l'émission acoustique reçue et ce seulement lorsqu'une intensité acoustique reçue par le récepteur est supérieure à un seuil (TH), et dans lequel lorsque le premier signal (SIG1) est appliqué, ladite intensité est inférieure audit seuil.

2. Système comportant :
un émetteur acoustique (200, 600) comprenant un générateur acoustique (110) destiné à être fixé d'un côté d'une paroi (106) ; et
un récepteur acoustique (300) destiné à être fixé d'un autre côté de la paroi,
dans lequel l'émetteur est configuré pour définir une fréquence d'une émission acoustique (f0) en fonction de l'admittance (A) du générateur (110) entre deux bornes (114, GND) d'application, au générateur, d'un premier signal d'excitation (SIG1), ladite fréquence étant choisie, parmi les fréquences correspondant à des extrema de phase, pour correspondre à celle pour laquelle la gamme de fréquences (DF) dans laquelle la phase de l'admittance reste proche de la valeur extrémale est la plus large, et l'émission acoustique étant destinée à être reçue par le récepteur acoustique, et ledit récepteur acoustique (300) étant alimenté en énergie par l'émission acoustique reçue et ce seulement lorsqu'une intensité acoustique reçue par le récepteur est supérieure à un seuil (TH), dans lequel lorsque le premier signal (SIG1) est appliqué, ladite intensité est inférieure audit seuil.

3. Procédé selon la revendication 1, ou système selon la revendication 2, dans lequel, après la définition de ladite fréquence, un deuxième signal d'excitation (SIG2) ayant une tension crête supérieure à une tension crête du premier signal (SIG1) est appliqué au générateur.

4. Procédé ou système selon la revendication 3, dans lequel ladite fréquence (f0) est ajustée lorsque le deuxième signal d'excitation (SIG2) est appliqué.

5. Procédé selon l'une quelconque des revendications 1 et 3 à 4, ou système selon l'une quelconque des revendications 2 à 4, dans lequel ladite admittance (A) est mesurée par un circuit de mesure d'admittance (250).

6. Procédé selon l'une quelconque des revendications 1 et 3 à 5, ou système selon l'une quelconque des revendications 2 à 5, dans lequel une bande de fréquences de communication acoustique (FB) est centrée sur ladite fréquence (f0).

7. Procédé selon l'une quelconque des revendications 1 et 3 à 6, ou système selon l'une quelconque des revendications 2 à 6, dans lequel ladite fréquence (f0) est définie de sorte que la phase de ladite admittance (A) soit sensiblement extrémale pour ladite fréquence.

8. Procédé selon l'une quelconque des revendications 1 et 3 à 7, ou système selon l'une quelconque des revendications 2 à 7, dans lequel deux valeurs d'un courant et d'une tension appliqués au générateur sont obtenues par démodulation IQ (610), puis sont divisées l'une par l'autre (255).

9. Système selon l'une quelconque des revendications 2 à 8, comprenant en outre ladite paroi (106), le générateur (110) et le récepteur (200) étant fixés sur la paroi de part et d'autre de la paroi.

## Patentansprüche

1. Verfahren (400), das folgende Schritte aufweist:
- Messen der Admittanz eines akustischen Generators (110) zwischen zwei Anschlüssen (114, GND), zum Anlegen, an den Generator, eines ersten Erregungssignals (SIG1);
- Verwenden der Admittanz zum Einstellen einer akustischen Übertragungsfrequenz (f0), wobei die Frequenz aus Frequenzen ausgewählt wird, die Phasenextrema entsprechen, um derjenigen zu entsprechen, für die der Frequenzbereich (DF), in dem die Admittanzphase nahe am Extremwert bleibt, am breitesten ist;
- Übertragen, durch den Generator, der an einer Seite einer Wand (106) angebracht ist, einer akustischen Übertragung mit der Frequenz; und
- Empfangen der akustischen Übertragung durch einen akustischen Empfänger (300), der an einer anderen Seite der Wand angebracht ist,
wobei der akustische Empfänger (300) nur dann durch die empfangene akustische Übertragung mit Strom versorgt wird, wenn eine akustische Intensität, die durch den Empfänger empfangen wird, größer als ein Schwellenwert (TH) ist, und wobei, wenn das erste Anregungssignal (SIG1) angelegt wird, die Intensität kleiner als der Schwellenwert ist.

2. System, das Folgendes beinhaltet:
einen akustischen Sender (200, 600), der einen akustischen Generator (110) aufweist, der dazu bestimmt ist, an einer Seite einer Wand (106) angebracht zu werden; und
einen akustischen Empfänger (300), der dazu bestimmt ist, an einer anderen Seite der Wand angebracht zu werden,
wobei der Sender konfiguriert ist zum Einstellen einer Frequenz einer akustischen Übertragung (f0) als Funktion der Admittanz (A) des Generators (110) zwischen zwei Anschlüssen (114, GND) zum Anlegen, an den Generator, eines ersten Erregungssignals (SIG1), wobei die Frequenz (f0) aus Frequenzen ausgewählt wird, die Phasenextrema entsprechen, um derjenigen zu entsprechen, für die der Frequenzbereich (DF), in dem die Admittanzphase nahe am Extremwert bleibt, der breiteste ist, und wobei die akustische Übertragung dazu bestimmt ist, vom akustischen Empfänger empfangen zu werden, wobei der akustische Empfänger (300) nur dann durch die empfangene akustische Übertragung mit Strom versorgt wird, wenn eine akustische Intensität, die vom Empfänger empfangen wird, größer ist als ein Schwellenwert (TH), und wobei, wenn das erste Anregungssignal (SIG1) angelegt wird, die Intensität kleiner als der Schwellenwert ist.

3. Verfahren nach Anspruch 1 oder System nach Anspruch 2, wobei nach Definieren der Frequenz ein zweites Erregungssignal (SIG2) mit einer Spitzenspannung, die größer ist als die Spitzenspannung des ersten Signals (SIG1), an den Generator angelegt wird.

4. Verfahren oder System nach Anspruch 3, wobei die Frequenz (f0) angepasst wird, wenn das zweite Erregungssignal (SIG2) angelegt wird.

5. Verfahren nach einem der Ansprüche 1 und 3 bis 4 oder System nach einem der Ansprüche 2 bis 4, wobei die Admittanz (A) durch eine Admittanzmessschaltung (250) gemessen wird.

6. Verfahren nach einem der Ansprüche 1 und 3 bis 5 oder System nach einem der Ansprüche 2 bis 5, wobei ein akustisches Kommunikationsfrequenzband (FB) auf die Frequenz (f0) zentriert ist.

7. Verfahren nach einem der Ansprüche 1 und 3 bis 6 oder System nach einem der Ansprüche 2 bis 6, wobei die Frequenz (f0) so eingestellt wird, dass die Phase der Admittanz (A) für diese Frequenz im Wesentlichen extrem ist.

8. Verfahren nach einem der Ansprüche 1 und 3 bis 7 oder System nach einem der Ansprüche 2 bis 7, wobei zwei Werte eines Stroms und einer Spannung, die an den Generator angelegt werden, durch IQ-Demodulation (610) erhalten und dann durcheinander geteilt werden (255).

9. System nach einem der Ansprüche 2 bis 8, ferner aufweisend die Wand (106), den Generator (110) und den Empfänger (200), die an beiden Seiten der Wand an der Wand angebracht sind.

## Claims

1. Method (400) comprising steps of:
- measuring the admittance of an acoustic generator (110) between two terminals (114, GND) for applying, to the generator, a first excitation signal (SIG1);
- using said admittance to set an acoustic transmission frequency (f0), said frequency being selected from frequencies corresponding to phase extrema, to correspond to that for which the range of frequencies (DF) in which the admittance phase keeps close to the extremum value is the widest one;
- transmitting, by said generator attached to one side of a wall (106), an acoustic transmission having said frequency; and
- receiving the acoustic transmission by an acoustic receiver (300) attached to another side of the wall,
wherein said acoustic receiver (300) is power supplied by the received acoustic transmission only when an acoustic intensity received by the receiver is greater than a threshold (TH), and wherein when the first excitation signal (SIG1) is applied, said intensity is lower than said threshold.

2. System including:
an acoustic transmitter (200, 600) comprising an acoustic generator (110) intended to be attached to one side of a wall (106); and
an acoustic receiver (300) intended to be attached to another side of the wall,
wherein the transmitter is configured to set a frequency of an acoustic transmission (f0) as a function of the admittance (A) of the generator (110) between two terminals (114, GND) for applying, to the generator, a first excitation signal (SIG1), said frequency (f0) being selected from frequencies corresponding to phase extrema, to correspond to that for which the range of frequencies (DF) in which the admittance phase keeps close to the extremum value is the widest one, and the acoustic transmission being intended to be received by the acoustic receiver, said acoustic receiver (300) being power supplied by the received acoustic transmission only when an acoustic intensity received by the receiver is higher than a threshold (TH), and wherein when the first excitation signal (SIG1) is applied, said intensity is less than said threshold.

3. Method according to claim 1 or system according to claim 2, wherein, after defining said frequency, a second excitation signal (SIG2) having a peak voltage greater than a peak voltage of the first signal (SIG1) is applied to the generator.

4. Method or system according to claim 3, wherein said frequency (f0) is adjusted when the second excitation signal (SIG2) is applied.

5. Method according to any one of claims 1 and 3 to 4 or system according to any one of claims 2 to 4, wherein said admittance (A) is measured by an admittance measuring circuit (250).

6. Method according to any one of claims 1 and 3 to 5 or system according to any one of claims 2 to 5, wherein an acoustic communication frequency band (FB) is centred on said frequency (f0).

7. Method according to any one of claims 1 and 3 to 6 or system according to any one of claims 2 to 6, wherein said frequency (f0) is set so that the phase of said admittance (A) is substantially extreme for said frequency.

8. Method according to any one of claims 1 and 3 to 7 or system according to any one of claims 2 to 7, wherein two values of a current and a voltage applied to the generator are obtained by IQ demodulation (610), and then divided by each other (255).

9. System according to any one of claims 2 to 8, further comprising said wall (106), the generator (110) and the receiver (200) being attached to the wall on either side of the wall.
